Europäisches Patentamt

European Patent Office

Office européen des brevets

(19)

(11) Publication number : **0 499 400 A2**

(12) **EUROPEAN PATENT APPLICATION**

(21) Application number : 92300989.8

(22) Date of filing : 06.02.92

(51) Int. Cl.⁵ : **G11B 23/087,** G11B 15/08

(30) Priority : **13.02.91 US 654820**

(43) Date of publication of application :
**19.08.92 Bulletin 92/34**

(84) Designated Contracting States :
**DE GB NL**

(71) Applicant : **MINNESOTA MINING AND
MANUFACTURING COMPANY**
**3M Center, P.O. Box 33427**
**St. Paul, Minnesota 55133-3427 (US)**

(72) Inventor : **Alexander, Jerry L., c/o Minnesota
Mining and**
**Manufact. Co., 2501 Hudson Road, P.O. Box
33427**
**St. Paul, Minnesota 55133-3427 (US)**

(74) Representative : **Baillie, Iain Cameron et al**
**c/o Ladas & Parry, Altheimer Eck 2**
**W-8000 München 2 (DE)**

(54) **Improved optical element for magnetic recording tape cartridges.**

(57) A curved reflective surface directs light through a transparent portion of the tape of a belt-driven magnetic recording tape cartridge.

Fig. 7

EP 0 499 400 A2

Technical Field

This invention involves belt-driven magnetic recording tape cartridges, and particularly the optical system employed in such a cartridge to determine the position of the tape.

Background

A popular type of magnetic data recording tape is contained within a cartridge, commonly called a "tape cartridge" or "data cartridge." The cartridge encloses the tape, which is wound without attachment at the tape ends onto two reels or hubs. The tape is driven by a friction coupled endless internal belt and capstan system in which the belt contacts the periphery of the wound tape. The minimum requirements for the physical and magnetic interchange of one magnetic tape cartridge of this type are presented in American National Standard X3.55-1982 and subsequent Standards incorporating X3.55-1982. Requirements for a similar but smaller "magnetic tape mini-cartridge" are presented in Proposed American National Standard X3B5/87-218, 3rd Draft, October 12, 1987. Tape cartridges meeting these minimum physical requirements are said to have the "form factor" defined by the dimensions and configuration specified by the appropriate standard or draft standard. In this specification and the claims, the terms "cartridge" and "tape cartridge" refer to a magnetic recording tape cartridge substantially as described by either standard, and thus having substantially either form factor, unless it is specifically identified as a "full-sized tape cartridge" or a "mini-tape cartridge."

A feature of present tape cartridges is an optical system for indicating to the drive that the recording tape is located near an end of the acceptable recording area of the tape, as well as near a physical end of the tape. The optical system comprises a light source and photocells in the tape drive, and at least one optical element (usually at least a plane mirror) in the tape cartridge. Light emitted from the light source enters the cartridge, then is directed by the optical system toward the back (non-magnetic) side of the recording tape. A pattern of holes in a portion of the tape allows light to exit the cartridge (and thus reach the photocells) only if that portion of the tape is in front of the photocells. This signals the position of the tape to the tape drive. In the case of the holes indicating the physical end of the tape, the light reaches the photocells only if the tape is very nearly unwound from the reels or hubs. Thus, the direction of tape travel may be reversed before the physical end of the tape unwinds from the hub, an undesirable condition known as "tape-off."

Improvements to the optical system to prevent tape-off generally involve increasing the signal-to-noise ratio (SNR) of the light detected by the photocells. To minimize component costs, recording drives generally employ only a single light source. In full-sized data cartridges, ANSI Standards require that at least one portion of the tape have two holes arranged side-by-side across the tape width. Thus, some cartridges have beam splitters of various types to focus some light on each hole and improve SNR. Similarly, recording drives generally use photodetectors having fairly large solid entrance angles, and thus some cartridges employ refocusing or converging optics between the tape and the photocells to narrow the light beam and thus improve SNR.

Disclosure of Invention

The invention is a tape cartridge comprising a housing having entrance and exit passages for light, and a magnetic data recording tape having at least one transparent portion. Within the housing is an optical element having a curved reflective surface. Light enters the tape cartridge through the entrance passage, and the curved reflective surface directs the light onto the magnetic data recording tape. A portion of the light passes through the transparent portion of the tape, and then out of the cartridge through the exit passage of the housing.

Brief Description of the Drawing

Figure 1 is a top view, partially in section, of an inventive tape cartridge shown in position in a tape drive.
Figure 2 is a cross-sectional view taken generally along the line 2-2 of Figure 1.
Figure 3 is a perspective view, partially in section, of portions of the tape cartridge and tape drive of Figure 1.
Figure 4 is a schematic partial cross sectional view of a portion of the tape cartridge of Figure 1.
Figure 5 is a schematic partial cross sectional view of a portion of a second embodiment of the invention.
Figure 6 is a schematic partial cross sectional view of a portion of a third embodiment of the invention.
Figure 7 is a schematic partial cross sectional view of a portion of a fourth embodiment of the invention.

Detailed Description

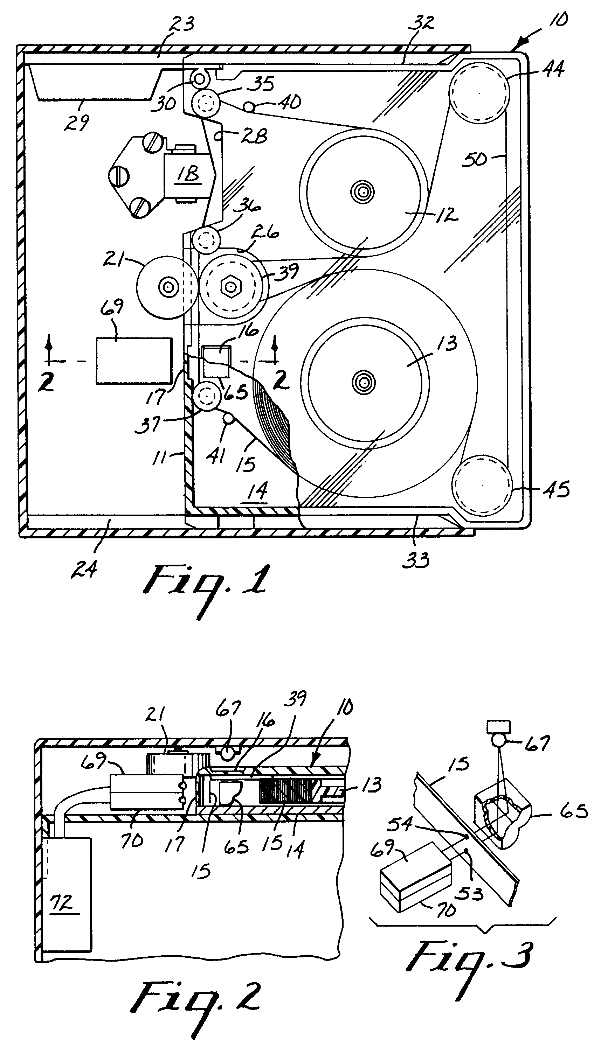

Figures 1-2 show a full-sized tape cartridge, substantially as described in American National Standard X3.55-1982. The cartridge is shown in operating position on a tape drive (a machine for reading, writing, and erasing data to and from the tape as appropriate).

The cartridge includes a base 14 and a shell 10, together defining a thin, generally rectangular enclosure having front wall 11. Within the shell 10 are reel hubs 12 and 13, tape guides 35, 36 and 37, tape wrap pins 40 and 41, magnetic data recording tape 15, belt driving roller 39, belt guide rollers 44 and 45, and driving belt 50.

An opening 26 in front wall 11 of shell 10 provides access for a drive roller 21, part of the tape drive, to contact belt driving roller 39. Similarly, through cutaway portion 28 in front wall 11, magnetic transducer 18 of the drive contacts magnetic tape 15. Cutaway portion 28 is normally covered by door 29, which is pivoted on stud 30 adjacent a corner of the cartridge, and biased by a torsion spring (not shown) toward its closed position, flush with front wall 11. The opposed edge walls 32 and 33 of the shell 10 are recessed along their lengths to expose the outermost portions of base 14. The elongate guides 23 and 24 in the drive are formed to fit over the exposed portions of base 14 to guide the cartridge as it is inserted, front wall 11 forward, into the drive until the position shown is achieved. Door 29 extends beyond its pivot stud 30 into a recessed portion of the adjacent edge wall 32, and the leading edge of the corresponding elongate guide 23 is beveled to pivot door 29 to an open position as the cartridge is inserted into the drive.

Reel hubs 12 and 13 are supported by cartridge shell 10 for free rotation about spaced parallel axes. Tape 15 is wound on reel hubs 12 and 13 in opposite directions about their axes. A tape guide path between the reel hubs is defined by the three tape guide pins 35, 36, and 37 and the pair of tape wrap pins 40 and 41. One tape guide pin 35 is at one side of cartridge cutaway portion 28, and the other two tape guide pins 36 and 37 are along the edge wall of the cartridge on the opposite side of cutaway portion 28. One tape wrap pin 40 is along the tape guide path between reel hub 12 and tape guide pin 35, and the other tape wrap pin 41 is along the tape guide path between reel hub 13 and tape guide pin 37.

Drive belt 50 is thin, continuous, flexible, elastic, and uniform in cross section. Drive belt 50 extends in a belt guide path which takes it around belt driving roller 39 and belt guide rollers 44 and 45, contacting tape 15 on reel hubs 12 and 13. The elasticity, length, pretension, and angle of wrap of drive belt 50 at the reel hubs provide the necessary contact to assure frictional driving of tape 15 and reel hubs 12 and 13 by belt 50. Rotation of belt driving roller 39 by drive roller 21 of the drive causes belt 50 and tape 15 to move.

Magnetic data recording tape 15 has at least one hole adjacent each of its ends; Figure 3 shows two holes 53 and 54, as appears near one end of the tape of a full-sized data cartridge. The use of holes in the tape is preferred but not required, and thus employed here for illustrative purposes only. In general, any tape having at least one transparent portion is suitable for use in the invention.

Such a transparent portion could be, for example, simply an uncoated portion of the tape, which typically comprises a transparent substrate coated with non-transparent magnetic material. Thus, for the purposes of this invention, a tape portion is transparent when it transmits through itself more light than the maximum for a coated portion allowed by the ANSI standard (or proposed standard) applicable to the cartridge in which the tape is installed. For example, for a full-sized tape cartridge per ANSI X3.55-1982, a transparent tape portion has a light transmittance of at least 0.5 percent, as measured by means of each of the following light sources when using a silicon phototransistor for detection: (1) a tungsten lamp having a color temperature of 2000 $\pm$ 200 degrees Kelvin; and (2) a light-emitting diode having a peak output at 900 $\pm$ 50 nanometers wavelength. Standards for cartridges having different form factors may have slightly different values (e.g., two percent transmittance, or use of a 940 $\pm$ 50 nm light-emitting diode).

The pattern of transparent portions of the tape may be encoded to indicate the type of magnetic recording tape present (e.g., the coercivity of the magnetic material), the length of tape present, the boundaries of the portion of the tape upon which data may be written, or an indication that the physical end of the tape is approaching the magnetic head. Generally, any set of holes present is repeated to ensure reliability of detection.

Two photocells 69 and 70 are positioned in the tape drive adjacent the cartridge position to collect light transmitted through holes 53 and 54. Each photocell is vertically aligned with its respective hole, and generally has a circular opening for receiving light. Thus, the preferred shape of the hole during tape movement is circular; the preferred shape of the hole in a stationary tape is actually an ellipse which has its major axis aligned perpendicular to the length of the tape 15. Then, upon stretching of tape 15 during use, the elliptical hole is distorted to a circular shape, which improves reliability of detection by the photocell.

Photocells 69 and 70 are electrically connected to a logic circuit which is illustrated schematically in Figure 2 by box 72. When the photocells signal detection of light to the logic circuit, the circuit instructs the tape drive according to the information encoded in the light pattern received. For example, a hole pattern may signal that the physical end of the tape is approaching, and thus the drive motor should stop and then reverse the direction of travel of the recording tape. This avoids the undesirable "tape-off" condition.

As shown in detail in Figure 4, light from lamp 67 in the tape drive passes through entrance passage 16 (e.g., a window in the shell 10) into the tape cartridge. The light is reflected against the rear face of tape 15 by the two curved reflective surfaces of optical element 65. Optical element 65 is a piece of optical quality molded plastic, having an index of refraction greater than one, which functions as a prism. Some of the light passes through each of holes 53 and 54, then through exit passage 17 (a window in front wall 11) and out of the tape cartridge, to be detected by photocells 70 and 69, respectively.

Optical element 65 has a doubly curved reflective surface, which both splits the light beam in two and directs each such beam onto the area of the tape immediately adjacent the holes. This is the preferred embodiment for a cartridge which has two holes (arranged transversely to tape travel direction) in at least one portion of the tape. If the tape has only a single row of holes, a singly curved reflective surface would be preferred, as the optical element is easier to manufacture. In either case, however, the optical element employs a curved reflective surface to direct light onto the tape. Prior art cartridges employ a single flat mirror, or a flat portion of a prism, angled at approximately 45° to the base of the cartridge, to reflect a single or double light beam onto the tape.

The use of optical element 65 improves the reliability of the optical system for two reasons. First, the double curvature of the reflective surface divides light from lamp 67 into two narrow reflected beams, which increases the amount of light passing through each of holes 53 and 54. The light emitted by lamp 67 has a divergence half-angle of as much as 10° to 50°. In fact, due to this divergence, some of the reflected light in present cartridges is directed above and below the width of the tape. However, a curved reflector reflects much more light through the hole than a flat mirror, increasing the likelihood of accurate and timely detection of the light by photocells 69 and 70. Furthermore, a narrower (and thus more intense) reflected light beam helps account for variations in lamp beam intensity from drive to drive.

Second, an optical element having a curved reflector will direct more light through the holes 53 and 54, despite less accurate placement in the cartridge (both horizontally and vertically in the plane of Figure 4), than an element having a flat reflector. Both of these factors reduce the chance that a cartridge will have a tape-off condition.

Figure 4 shows the focal point of the curved surfaces near the entrance point of each photocell. To increase signal-to-noise ratio, the maximum amount of light should pass through the hole, which suggests that the focal point should be near the position of the holes in the tape. While this permits some spreading of the light before it reaches the photocell, most of the light will still be within the entrance angle of the photocell. However, locating the focal point exactly at the location of the hole involves some risk, as there is always the possibility of misalignment for whatever reason, and thus no light will pass through the hole and a tape-off may occur.

A suitable compromise locates the focal point beyond the tape. Thus, the size of the beam, measured transversely across the width of the tape, when it strikes the tape is greater than the size of the hole. However, the transverse size of the beam spot on the tape should be no larger than the width of the tape (or half-width, in the case of a double reflector), or else light is directed above or below the tape edges and is therefore unavailable for use in detection of the hole. A transverse size of approximately twice the hole diameter works well.

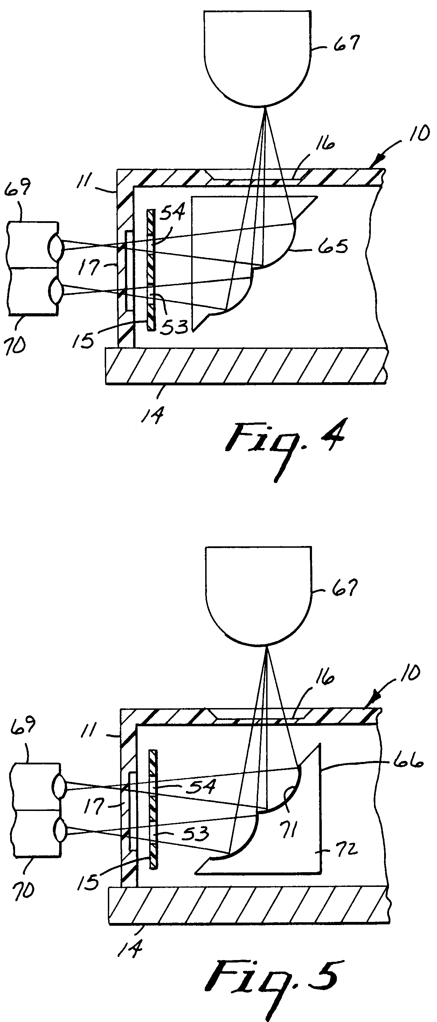

Figure 5 shows an alternative embodiment in which the optical element is a double concave mirror 66, formed by coating a reflective material 71 on a double curved (glass or polymeric) base 72. However, the use of reflective coatings is not preferred, due to the extra costs associated with manufacturing, materials handling, and high rates of rejection of improperly manufactured elements.

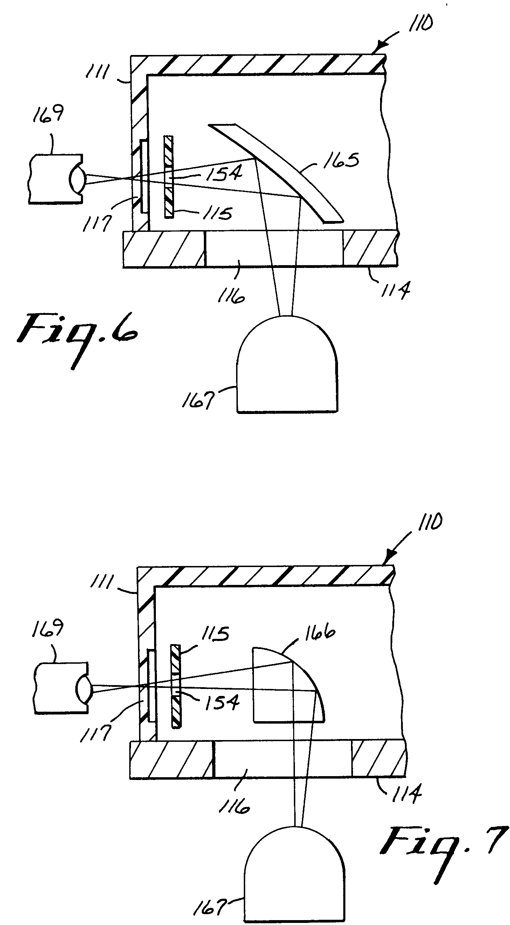

Figure 6 schematically shows the invention as embodied in a mini-tape cartridge. The view is a partial cross section in which tape 115 travels in the direction perpendicularly out of or into the plane of the Figure. The mini-tape cartridge comprises base 114, shell 110, and front wall 111, which together enclose tape 115 and concave mirror 165. An opening 116 in base 114 serves as the entrance passage, allowing light from lamp 167 to pass vertically from the drive to concave reflector 165, where it is reflected onto the back of tape 115. The single hole 154 in tape 115 allows light to reach photocell 169 through an exit window 117 in the front wall 111.

In a preferred embodiment, the concave reflector 165 is a portion of a hollow right circular cylindrical mirror which has its axis parallel to both the tape travel direction and the surface of the base 114. For a mini-tape cartridge, the mirror may have a radius of curvature of about 15.2 to 30.5 millimeters, preferably about 17.8 to 25.4 millimeters, most preferably about 20 millimeters. The mirror subtends an angle of about thirty degrees. The axis is located so that the reflective surface is at the intersection of the optical axes of the lamp 167 and the photocell 169, which intersect at 90±3°.

In the direction parallel to the cartridge base and perpendicular to the tape path, the concave reflector (or the lamp) can be moved ± 0.5 millimeter with little effect on the amount of light directed through the hole. The concave mirror can also be moved ± 0.5 millimeter in the direction perpendicular to the base plate with little effect.

A more preferred embodiment employs a single piece reflective prism rather than a mirror. Such a prism 166 is shown in Figure 7, with all other components of the Figure unchanged from Figure 6. Light follows essentially the same path in this embodiment as in the embodiment of Figure 6, except that it is reflected by the inner surface of the prism, rather than by the (front or back) surface of a concave mirror.

The main advantages of the single piece prism arise from manufacturing considerations. The prism may be molded in a single step. Manufacturing a mirror requires two steps, forming the piece and then creating the reflective surface (e.g., hot stamping or deposition of a reflective material). Furthermore, since base 114 is generally metal (for dimensional stability), a hole must be formed in the base to create a transparent area for light to enter the cartridge. Use of a mirror generally requires a cover piece for this section, but a prism molded with suitable flanges (not shown in the schematic view of Figure 6) could be installed directly into the cover or base. This minimizes the number of small pieces which must be handled as well as reducing the number of steps in the manufacturing process.

To reduce scattering by the prism, it is constructed of optical quality materials, such as polycarbonate (PC) or preferably polymethylmethacrylate (PMMA). The preferred radius of curvature for such a PMMA element is 20.32 millimeters. The surfaces should be optically smooth, having a surface roughness ($R_a$) of approximately 0.0254 micrometers or less.

Of course, other curved surfaces are acceptable, such as parabolic and elliptic surfaces, as they would also direct light onto the back of the tape surface. However, the advantages offered by more complex shapes do not justify the increased difficulties in manufacturing them to acceptable tolerances.

The optical elements are preferably mounted inside the cartridge using existing types of mounting pegs or holes, and in some versions of mini-tape cartridges it may be necessary to modify the write protection tab allow sufficient space for the elements.

Example 1

Two embodiments of the invention as described above for Figure 7 were compared to a prior art mini-tape cartridge, which used a triangular prism having a flat reflective surface. The first embodiment of the invention employed a curved polycarbonate (PC) prism and the second employed a curved polymethylmethacrylate (PMMA) prism, each substantially shaped as shown in Figure 7.

Refraction measurements employed a 633 nanometer with a 4X beam expander to produce a 4mm diameter beam. The detector was a United Detector Technology Model 61 optometer fitted with a radiometer filter. The optical element tested was placed in the beam path so that the refracted beam was at right angles to the incident beam. The percentage of refraction was made by comparing the energies of the incident and refracted beams.

Peak light intensity measurements were made on each optical element as installed in a tape cartridge housing, with the light path following the standard light path through the housing. All three tests were done with a standard 1.17 mm diameter "end sense" hole of a recording tape centered above the prism.

The two curved prisms were not of the optical smoothness of the flat prism, and so the measurements were normalized according to the ratios of the refraction percentages actually measured. Thus, a normalized intensity greater than the value for the flat prism indicates that more light energy is passing through the end sense hole as a result of the different prism geometries and not the optical qualities of the prism surfaces. Both curved prisms had such greater normalized values, as shown in the table below.

| ELEMENT | Percentage Refraction | Peak Intensity | Normalized Intensity |
|---|---|---|---|
| Flat Prism | 85 ± 2% | 187 | 187 |
| Curved Prism (PC) | 67 ± 4% | 159 | 202 |
| Curved Prism (PMMA) | 62 ± 3% | 145 | 199 |

Example 2

Next, the light transmitted through the end-sense hole was measured for prior art mini-tape cartridges having triangular prisms, prior art mini-tape cartridges having flat mirrors, and inventive mini-cartridges having optical quality PMMA curved prisms. Measurements (in microwatts) for each of ten mini-tape cartridges were made, and average measurements with the tape present were normalized to average values measured with no magnetic tape present. The results are shown in the following table, where the tolerances in the average measurements represent the standard deviation of the average.

| ELEMENT | Tape Present | Tape Not Present | Normalized |
|---|---|---|---|
| Flat Prism | 0.81 ± .095 | 2.33 ± .080 | 34.8% |
| Flat Mirror | 0.87 ± .031 | 1.98 ± .294 | 43.9% |
| Curved Prism | 1.37 ± .116 | 1.91 ± .118 | 71.7% |

A computer controlled tester was used to measure and plot the profile of the light beam leaving each of the three optical elements. The results are not calibrated in absolute terms, but the relative comparisons showed that the curved prism produced an intensity above an arbitrary threshold value over an area of $0.63 \pm 0.16$ square millimeters, compared to $0.48 \pm 0.15$ mm$^2$ for the flat prism, and only $0.10 \pm 0.06$ mm$^2$ for the flat mirror.

Also, with the 3.81 mm wide tape in place, the percentage of incident light passing over the edge of the tape was about 25% for the mini-tape cartridge having the flat mirror, about 18% for the mini-tape cartridge having the flat prism, and essentially zero for the inventive mini-tape cartridge having the curved prism.

**Claims**

1. A tape cartridge comprising
   a housing having entrance and exit passages for light,
   a magnetic data recording tape having at least one transparent portion, and
   within the housing, an optical element having at least one curved reflective surface which directs light after entrance into the tape cartridge toward the magnetic data recording tape, such that a portion of the directed light passes through the transparent portion of the tape and then through the exit passage of the housing.

2. The tape cartridge of claim 1 in which the optical element comprises a prism, and the curved reflective surface comprises a curved surface of the prism.

3. The tape cartridge of claim 1 in which the curved reflective surface comprises a reflective coating on a curved face of the optical element.

4. The tape cartridge of claim 1 in which the optical element comprises two curved reflective surfaces.

5. The tape cartridge of claim 1 in which the curved reflective surface is, in cross section, cylindrical.

6. The tape cartridge of claim 5 in which the optical element comprises, in cross section, a partial right circular cylinder having a radius of curvature between 15.2 and 30.5 millimeters.

7. The tape cartridge of claim 1 in which the curved reflective surface is, in cross section, parabolic.

8. The tape cartridge of claim 1 in which the curved reflective surface is, in cross section, elliptic.

9. The tape cartridge of claim 1 in which the size of the directed light striking the tape is greater than the size of the transparent portion of the tape, but no greater in width than the width of the tape.

10. The tape cartridge of claim 9 in which the width of the light striking the tape is about twice the diameter of the transparent portion of the tape.

Fig. 1

Fig. 2

Fig. 3

Fig. 4

Fig. 5

Fig.6

Fig.7